# EUROPEAN PATENT SPECIFICATION

(11) **EP 1 876 727 B1**
(45) Date of publication and mention of the grant of the patent: **19.05.2010**
(21) Application number: 07110853.4
(22) Date of filing: 22.06.2007
(51) Int. Cl.: H04B 7/06

(54) **System using multiple antennas for transmission of the control channel**
System unter Benutzung von mehreren Antennen zur Übertragung des Kontrollkanals
Système utilisant plusieurs antennes pour la transmission du canal de controle

(30) Priority: 05.07.2006 JP 2006185235
(43) Date of publication of application: 09.01.2008
(73) Proprietor: FUJITSU LIMITED, Kawasaki-shi, Kanagawa 211-8588 (JP)
(72) Inventor: Satou, Hideyori, Kawasaki-shi, Kanagawa 211-8588 (JP); Konta, Shinji, Kawasaki-shi, Kanagawa 211-8588 (JP)
(74) Representative: Fenlon, Christine Lesley

(56) References cited:
- WO-A-2005/069505
- KATZ M ET AL: "Combining space-time block coding with diversity antenna selection for improved downlink performance" VTC FALL 2001. IEEE 54TH. VEHICULAR TECHNOLOGY CONFERENCE. PROCEEDINGS. ATLANTIC CITY, NJ, OCT. 7 - 11, 2001, IEEE VEHICULAR TECHNOLGY CONFERENCE, NEW YORK, NY : IEEE, US, vol. VOL. 1 OF 4. CONF. 54, 7 October 2001 (2001-10-07), pages 178-182, XP010562669 ISBN: 0-7803-7005-8

## Description

### BACKGROUND OF THE INVENTION

### 1. Field of the Invention

The present invention relates to a communications system that transmits/receives through one or more antennas in accordance with a MIMO (Multiple-Input Multiple-Output) method or the like, a transmission apparatus, and a reception apparatus for the communications system. Specifically, the present invention relates to a communications system, a transmission apparatus, and a reception apparatus that are capable of effectively transmitting a control channel.

### 2. Description of the Related Art

Currently, the MIMO method is drawing much attention as a technology that enables high capacity (high speed) data communications by effectively utilizing a frequency band. The MIMO method uses a reception apparatus having plural antennas and a transmission apparatus having plural antennas. The MIMO method transmits independent data streams from the plural antennas of the transmission apparatus and the data streams are received by each antenna of the reception apparatus. The reception apparatus can separate into individual data streams the received signal that has the data streams mixed over propagation channels, thereby improving the transmission rate without expanding the frequency band. In addition to the MIMO method, a MISO (Multiple-Input Single-Output) method, where only a transmission apparatus has plural antennas, and a SIMO (Single-Input Multiple-Output) method, where only a reception apparatus has plural antennas, have been proposed.

Since a mobile communications system is now required to deal with multimedia communications and Internet access, the system needs to efficiently transmit radio signals at various transmission rates and qualities. A control channel, which transmits transmission control information for a radio signal, is divided into plural blocks for controlling transmission through corresponding antennas, and each block stores control information for the corresponding antenna.

There is described a transmission method based on a time division multiple access control channel in a conventional MIMO method mobile communications system that uses four transmission antennas and four reception antennas (4x4 antenna). By the way, the present invention can be practiced employing other multiple transmission methods such as a code division multiple access method using a spreading code in addition to the time multiple method.

In order to transmit fourfold control channels, there are a 1Tx control channel transmission method in which the channels are transmitted from one transmission antenna and a multi-antenna control channel transmission method in which the channels are transmitted from plural antennas.

### (1) 1Tx control channel transmission method

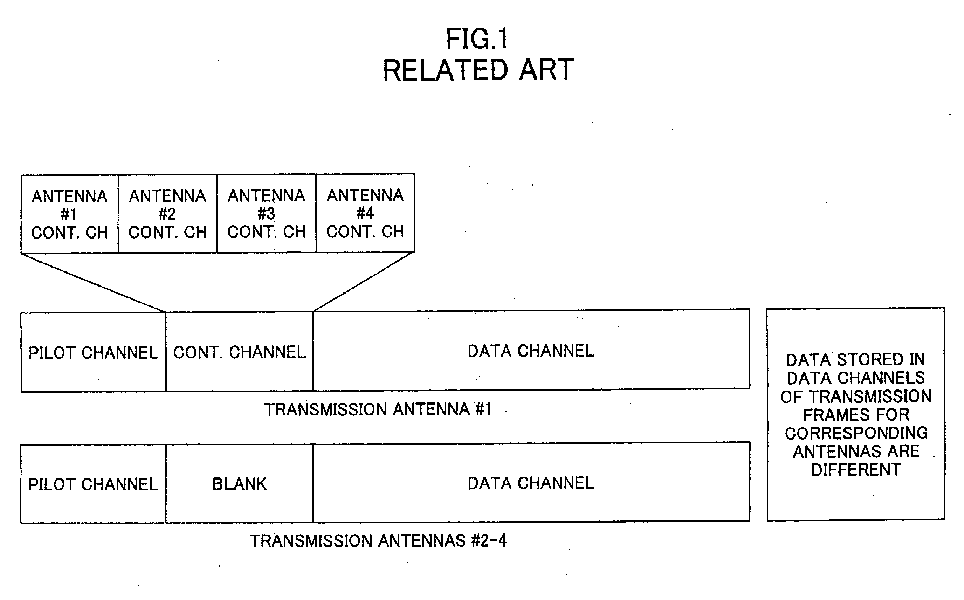

In the 1Tx channel transmission method of the MIMO (Multiple-Input Multiple-Output) mobile communications system, multiple pieces of transmission control information that should be stored in control channels for corresponding antennas are multiplexed; the multiplexed transmission control information is transmitted from one transmission antenna; and the transmission control of the radio signals transmitted/received from each antenna is performed based on the multiplexed transmission control information transmitted from the one transmission antenna. FIG. 1 shows an example of transmission frame formats when the transmission control information is transmitted based on the time divisional multiple access method.

As shown in FIG. 1, control channel blocks for first through fourth transmission antennas (#1-#4) are time divisionally multiplexed and stored only in a control channel area of a transmission frame for a first transmission antenna (#1), whereas no data are stored in control channel areas of transmission frames for the second through the fourth transmission antennas (#2-#4). By the way, transmission data stored in the data channels of the transmission frames for corresponding antennas may be different from one another.

### (2) Multiple antenna control channel transmission

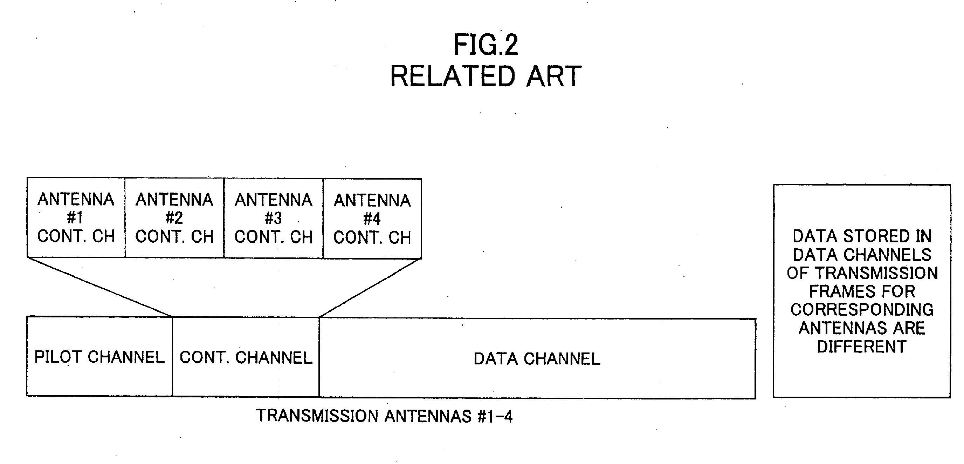

In the multiple antenna control transmission method of the MIMO (Multiple Input Multiple Output) mobile communications system, multiple pieces of transmission control information that should be stored in control channel areas of transmission frames for corresponding antennas are multiplexed; the multiplexed transmission control information is stored in every control channel area of the transmission frames for all the antennas and transmitted from the plural antennas; and the transmission control of the radio signals transmitted/received from each antenna is performed based on the multiplexed transmission control information transmitted from each transmission antenna. FIG. 2 shows an example of transmission frame formats when the transmission control information is transmitted based on time divisional multiple access method.

As shown in FIG. 2, control channel blocks for the first through the fourth transmission antennas (#1-#4) are time divisionally multiplexed; the multiplexed control channels are stored in the control channel areas of the transmission frames for the first through the fourth transmission antennas (#1-#4); and the transmission frames for the first through the fourth transmission antennas (#1-#4) are simultaneously transmitted from the first through the fourth antennas (#1-#4). By the way, transmission data stored in the data channels of the transmission frames for corresponding antennas may be different from one another.

JP 2004/297172 discloses a transmission apparatus employing the Space Division Multiplexing method. The transmission apparatus has two or more antennas and space divisionally multiplexes data having one or more sequences using a same frequency channel so as to transmit the data. The transmission apparatus has a transmission portion that generates space division multiplexing control data including the number of the antennas for use in transmitting among the two or more antennas and the number of data sequences to be transmitted. The transmission portion includes the space division multiplexing control data in at least one data sequence, thereby transmitting the control data.

In the aforementioned 1Tx control channel transmission method, since the transmission control information of the control channels for corresponding antennas is transmitted through one control channel area for one transmission antenna, the transmission control information may be received less efficiently than the transmission data in the data channels, depending on interference from other antennas and degradation in communications channels.

In this case, the transmission data cannot be demodulated even when the transmission data in the data channel are accurately received, if the transmission control information is not accurately received. Obviously, increased transmission power may be an effective way to improve reception of the control channel information. However, this is not always a practical solution, because the transmission power for each antenna cannot be increased beyond power source capacity.

On the other hand, in the aforementioned multi-antenna control channel method, since the transmission control information including all the control channels for corresponding antennas is stored in all the control channel areas and the control channels are transmitted, reception of the transmission control information is ensured by superposing the control channel areas of each transmission frame received by each antenna, compared with the 1Tx control channel transmission method, even when the propagation channels are in a degraded condition. However, when the propagation channels are in a good condition, the transmission power is unduly consumed by transmitting the transmission control information through all the antennas.

In other words, in the conventional multi-antenna control channel transmission method, since the transmission control information is stored in every control channel area and transmitted through a fixed number of transmission antennas regardless of the propagation channel conditions, such transmission consumes unnecessary electric power and also interfere with other communications.

Moreover, in the 1Tx antenna transmission method, the control channel is influenced by noise more heavily than the data channel, depending on the modulation method for transmitting data. If this happens, the control channel cannot be received even when the data channel is successfully received, which results in unsuccessful demodulation of the transmission data in the data channel.

The objective of the present invention is to improve reception of the control channel while eliminating unnecessary consumption of transmission power for transmitting the control channel.

The document entitled, "Combining Space-time Block Coding with Diversity Antenna Selection for Improved Downlink Performance", Marcos Katz et el VTC FALL 2001. IEEE Vehicular Technology Conference, New York, 7 October 2001., discloses a closed-loop method combining N-out-of-M antenna selection and space-time block coding from the selectee antennas.

WO 2005/069505 discloses methods for transmitting a signal in a mobile communications system using a plurality of transmit/receive antennas. One method comprises the steps of: a receiving end calculating a signal-to-interference noise ratio (SINR) with respect to every antenna pair, configuring STTD pairs to be transmittable from a transmitting end; feeding back information indicating an antenna pair having the greatest SINR to the transmitting end; and the transmitting end performing a D-STTD transmission through the antenna pair determined by the information fed back. Another method comprises the steps of: a receiving end feeding back information of an antenna pair and/or an eigenvector (weight vector) of a channel matrix with respect to transmit antennas included in the space-time multiplexing (STTD) pair of the transmitting end; and the transmitting end forming a beam by multiplexing a symbol with respect to each STTD pair by the eigenvector, and thereafter transmitting the beam through each transmit antenna (in case of using two antennas) or a transmit antenna pair (in case of using more than four antennas) determined by the information of the antenna pair.

### SUMMARY OF THE INVENTION

A first aspect of the present invention provides a communications system that comprises a transmission apparatus that transmits radio signals using a plurality of transmission antennas; and a reception apparatus that receives the radio signals using a plurality of reception antennas. In the communications system, multiplexed transmission control information is stored to be transmitted in a control channel area of at least one of a plurality of transmission frames corresponding respectively to the radio signals transmitted from the plural transmission antennas, the multiplexed transmission control information being obtained by multiplexing pieces of transmission control information for radio signals transmitted from the plural transmission antennas. In addition, the reception apparatus includes a transmission quality information notification portion that measures transmission quality of the radio signals from the transmission apparatus so as to obtain transmission quality information and transmits the transmission quality information to the transmission apparatus, and the transmission apparatus includes a transmission antenna number selection portion that selects the number of antennas that transmit the multiplexed transmission control information in accordance with the transmission quality information received from the reception apparatus.

A second aspect of the present invention provides the communications system according to the first aspect, where the transmission apparatus and the reception apparatus further include an antenna number selection table that stores antenna numbers corresponding to the transmission quality information, where the transmission apparatus refers to the antenna number selection table so as to determine the number of the transmission antennas for use in transmitting the multiplexed transmission control information, and where the reception apparatus refers to the antenna number selection table so as to determine the number of the reception antennas for use in receiving the multiplexed transmission control information.

A third aspect of the present invention provides the communications system according to the first or the second aspect, where when the reception apparatus determines that the number of reception errors is more than or equal to a predetermined number, the reception apparatus notifies the transmission apparatus of a propagation channel anomaly which corresponds to the transmission quality information and selects the maximum number of the reception antennas for use in receiving the multiplexed transmission control information, and when the transmission apparatus is notified of the propagation channel anomaly the transmission apparatus selects the maximum number of the transmission antennas for use in transmitting the multiplexed transmission control information.

A fourth aspect of the present invention provides a transmission apparatus that comprises a plurality of transmission antennas; a transmission antenna number selection portion that selects the number of transmission antennas than transmit multiplexed transmission control information obtained by multiplexing multiple pieces of transmission control information for corresponding radio signals in accordance with transmission quality information transmitted from a reception apparatus; and a notification portion that notifies the reception apparatus of the selected number of the transmission antennas.

A fifth aspect of the present invention provides a reception apparatus that comprises a plurality of reception antennas; a transmission quality notification portion that notifies a transmission apparatus of transmission quality information determined in accordance with a reception signal; an antenna number selection table that stores the number of the reception antennas in accordance with the transmission quality information; and a reception antenna number selection portion that selects in reference to the antenna number selection table the number of the reception antennas for use in receiving multiplexed transmission control information obtained by multiplexing multiple pieces of transmission control information for corresponding radio signals.

According to these aspects of the present invention, the number of antennas that transmit the multiplexed transmission control information in the control channel area can be determined in accordance with the propagation channel condition. Therefore, when the propagation channel is in good condition, unnecessary electric power consumption, which is caused if the multiplexed transmission control information is transmitted through plural antennas, is prevented. In addition, when the propagation channel is in poor condition, the number of antennas that transmit the control channel in which the multiplexed transmission control information is stored is increased, so that a reception rate of the transmission control information through superposed reception is improved, thereby retaining propagation quality comparable to the propagation quality realized by the multi-antenna control channel method.

### BRIEF DESCRIPTION OF THE DRAWINGS

In accompanying drawings:
FIG. 1 is an example of a transmission frame format according to the 1Tx control channel transmission method;
FIG. 2 is an example of a transmission frame format according to the multi-antenna control channel transmission method;
FIG. 3 is a functional block diagram of a transmission apparatus and a reception apparatus according to an embodiment of the present invention;
FIG. 4 is an example of a flowchart of the transmission apparatus according to the embodiment of the present invention; and
FIG. 5 is an example of a flowchart of the reception apparatus according to the embodiment of the present invention.

### DETAILED DESCRIPTION OF THE PREFERRED EMBODIMENT

Referring to the accompanying drawings, embodiments of the present invention will be described.

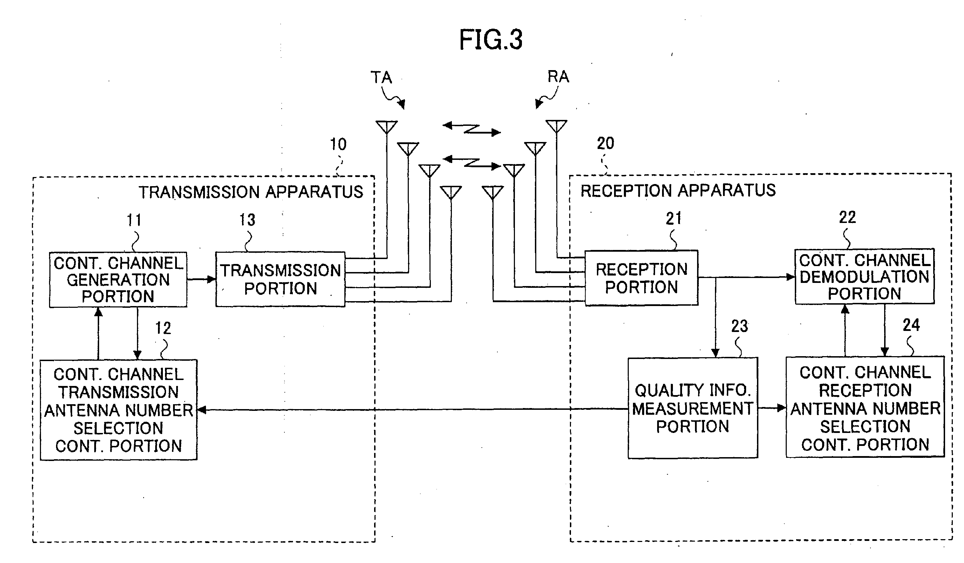

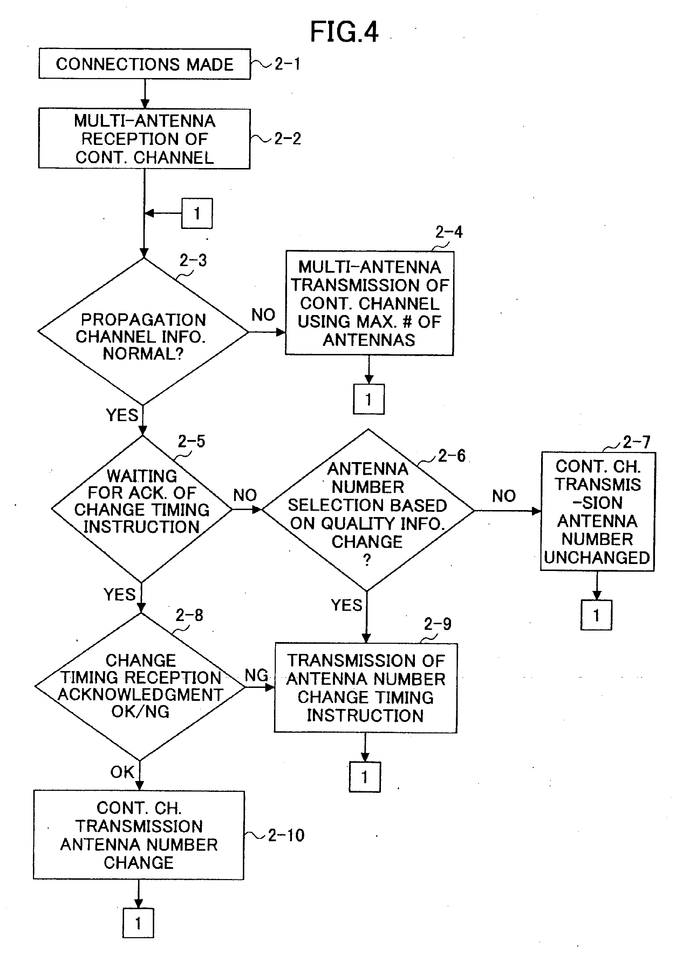

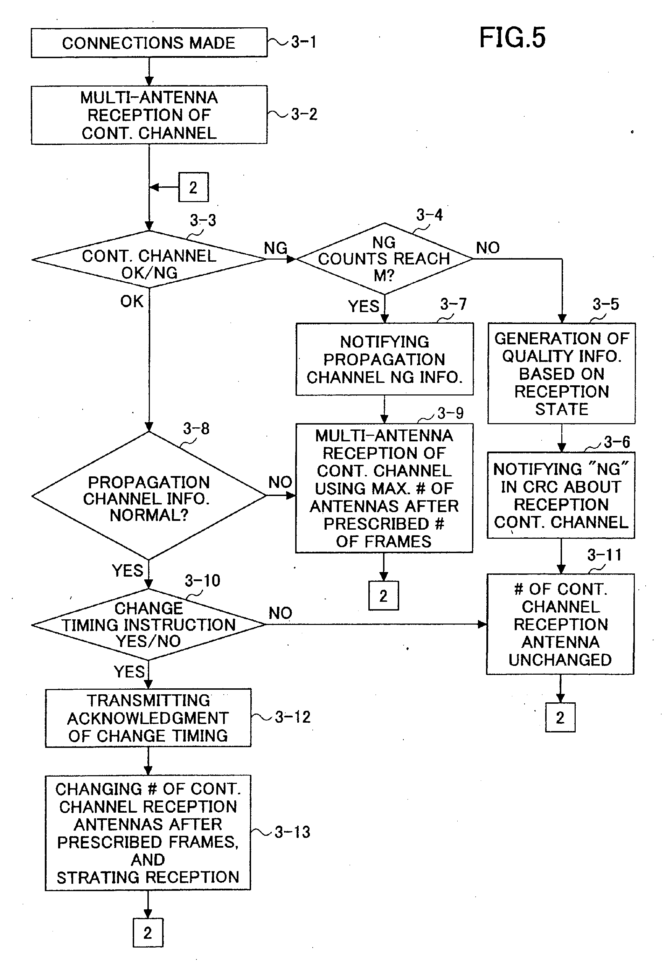

FIG. 3 illustrates function blocks of a transmission apparatus and a reception apparatus of a communications system according to an embodiment of the present invention. In addition, FIG. 4 is a flowchart illustrating an operational sequence of the transmission apparatus according to the embodiment of the present invention. FIG. 5 illustrates another flowchart illustrating an operational sequence of the reception apparatus according to the embodiment of the present invention.

In a transmission apparatus 10, an antenna number selection control portion 12 configured to select the number of control channel transmission antennas recognizes a current condition of a propagation channel based on transmission quality information transmitted from a quality information measurement portion 23 of a reception apparatus 20 so as to select the number of the transmission antennas for use in transmitting a control channel depending on the condition of the propagation channel. In addition, the antenna number selection control portion 12 informs a control channel generation portion 11 of the number of the selected transmission antennas.

The control channel generation portion 11 generates the control channel that includes multiplexed transmission control information obtained by multiplexing multiple pieces of transmission control information of radio signals for corresponding transmission antennas in control channel areas of radio signal transmission frames. Here, the number of the radio signal transmission frames corresponds to the number of the transmission antennas selected by the antenna number selection control portion 12. Then, a transmission portion 13 organizes transmission frames that include the control channel generated by the control channel generation portion 11 and a data channel for corresponding transmission antennas, and transmits the transmission frames through plural transmission antennas TA.

In the reception apparatus 20, a reception signal from the transmission portion 13 of the transmission apparatus 10 is received by a reception portion 21 through plural reception antennas RA. Then, a control channel demodulation portion 22 demodulates the control channel from the reception signal under control of a control channel reception antenna selection control portion 24 so as to obtain the information on the number of control channel transmission antennas. The control channel demodulation portion 22 sends the information to the control channel reception antenna selection control portion 24 which in turn determines based on the information on the number of the control channel transmission antennas whether the number of control channel transmission antennas has been changed.

By the way, when connections between the transmission apparatus 10 and the reception apparatus 20 are first made, the number of the control channel transmission antennas cannot be selected based on the transmission quality information. Therefore, the control channels are first transmitted by the multi-antenna control channel transmission method and then the transmission environment is observed based on the transmission quality information obtained by the quality information measurement portion 23 of the reception apparatus 20. Then, either the 1Tx control channel transmission method or the multi-antenna control channel transmission method is selected to transmit the control channel.

When the transmission methods are switched from 1Tx control channel transmission method to the multi-antenna control channel transmission method, or otherwise, control channel transmission selection bits stored as the transmission control information in the control channels are changed and notification of the change is sent to the reception apparatus 20. When the reception apparatus 20 recognizes the change in the number of the control channel transmission antennas, the reception apparatus 20 transmits an acknowledgment (ACK) of the proper reception of the change notification. After confirming that the change in the number of the control channel transmission antennas has been acknowledged, the transmission apparatus 10 changes the number of the control channel transmission antennas.

Although the change in the number of the control channel transmission antennas typically means a change from one antenna to the maximum number of antennas, the number may be changed from one to N (1 < N < the maximum number) depending on the transmission environment, which is an embodiment according to the present invention. Obviously, in this case, the control channel transmission selection bits stored as the transmission control information in the control channels are required to be capable of representing any number from 1 to the maximum number.

In addition, when the number of the control channel transmission antennas is changed, the transmission apparatus 10 and the reception apparatus 20 may include identical antenna number selection tables for selecting the number of the control channel transmission antennas based on the transmission quality information, which makes it possible to quickly change the number of the control channel transmission antennas based on the transmission quality information in both the transmission apparatus 10 and the reception apparatus 20.

In this case, it is not necessary to store the control channel transmission selection bits in the control channel in order to inform the reception apparatus 20 of the bits. However, it is required to determine that the transmission quality information is properly transmitted from the reception apparatus 20 to the transmission apparatus 10. Namely, after the reception apparatus 20 receives from the transmission apparatus 10 the acknowledgment (ACK) indicating the successful reception of the transmission quality information from the reception apparatus 20, the number of the control channel transmission antennas is changed.

In addition, when an optimum number of the control channel transmission antennas is selected, an abrupt change in a propagation channel condition may prevent the control channel from being properly received. In order to address such a disadvantage, the reception apparatus 20 may be configured to count the number of reception errors of the reception signal (transmission control information) including the control channel. When the reception apparatus 20 detects that the number of reception errors reaches a predetermined number, the reception apparatus 20 places transmission channel abnormal bits in the storing area of the transmission quality information and informs the transmission apparatus 10 of the anomaly in the propagation channel, which allows the reception apparatus 20 and the transmission apparatus 10 to select the maximum number of the antennas so as to transmit/receive the control channel.

Also in the embodiment any number, between one and the maximum number, of the control channel transmission antennas can be selected since the number of the control channel transmission antennas cannot be selected based on the transmission quality information measured by the reception apparatus 20 when the connections between the transmission apparatus 10 and the reception apparatus 10 are first made.

In this case, the control channel can be first transmitted using a predetermined number K of the antennas.

Referring to FIG. 4, an example of an operational sequence of the transmission apparatus according to an embodiment of the present invention is explained. When the connections between the transmission apparatus 10 and the reception apparatus 20 are first made (2-1), the transmission apparatus 10 transmits the control channel employing the multi-antenna control channel transmission method (2-2). Then, the transmission apparatus 10 determines whether the propagation channel condition is normal based on the transmission quality information transmitted from the reception apparatus 20 (2-3). When the transmission apparatus determines that the propagation channel condition is not normal (NO at step 2-3), the transmission apparatus transmits the control channel using the maximum number of the antennas (2-4). Then, the sequence is returned to step 2-3.

When the reception apparatus 20 determines that the propagation channel condition is normal (YES at step 2-3), it is further determined whether an acknowledgment of an instruction of timing to change the number of the control channel transmission antennas is awaited (2-5). When the acknowledgment is determined to not be awaited, it is then determined based on the transmission quality information whether the number of the control channel transmission antennas should be changed (2-6). When it is determined that the number of the control channel transmission antennas is not to be changed (NO at step 2-6), the number is maintained the same (2-7). Then, the sequence is returned to step 2-3.

When the number of the control channel transmission antennas is determined to be changed (YES at step 2-6), the instruction of the timing to change the number of the control channel transmission antennas determined based on the transmission quality information is transmitted to the reception apparatus 20 (2-9). Then, the sequence is returned to step 2-3.

In addition, when it is determined at step 2-5 that the acknowledgment of the instruction of the timing to change the number of the control channel transmission antennas is awaited, it is then determined whether the acknowledgment of the instruction is properly received from the transmission apparatus 10 (2-8). When the acknowledgment is determined to not be properly received, step 2-9 is carried out as explained above. Then, the sequence is returned to step 2-3. On the other hand, when it is determined at step 2-8 that the acknowledgment is properly received, the number of the control channel transmission antennas is changed in accordance with the transmission quality information (2-10). Then, the sequence is returned to step 2-3.

Referring to FIG. 5, an example of an operational sequence of the reception apparatus according to an embodiment of the present invention is explained. When the connections between the transmission apparatus 10 and the reception apparatus 20 are first made (3-1), the reception apparatus 20 receives the control channel employing the multi-antenna control channel transmission method (3-2). Then, the reception apparatus 20 determines whether the reception information of the control channel transmitted from the transmission apparatus is properly received without errors (3-3).

When the reception information of the control channel is not properly received (NG at step 3-3), it is further determined whether the number of the abnormal receptions reaches a predetermined value M (3-4). When the number of the improper receptions does not reach the predetermined value M (NO at step 3-4), the transmission quality information is generated (3-5); the reception apparatus 10 is informed that the Cyclic Redundancy Check (CRC) performed for the control channel of the reception signal results in failure (3-6); and the number of the control channel reception antennas is unchanged (3-11). Then, the sequence is returned to step 3-3.

When it is determined at step 3-4 that the number of the improper receptions reaches the predetermined value M, the reception apparatus 20 is informed of the transmission quality information which indicates that the propagation channel is in an abnormal condition (3-7). Then, after a prescribed number of frames are sent, the multi-antenna control channel transmission method using the maximum number of the control transmission antennas is employed, so that the control channel is received (3-9). Then, the sequence is returned to step 3-3.

When it is determined at step 3-3 that the reception information of the control channel is properly received (OK at step 3-3), it is further determined based on the received information whether the propagation channel is in an abnormal condition (3-8). When the transmission channel is determined to be in an abnormal condition, the multi-antenna control channel method is adopted so as to receive the control channel through the maximum number of the antennas (3-9). Then, the sequence is returned to step 3-3.

When it is determined at step 3-8 that the transmission channel is in a normal condition, it is further determined whether the instruction of the timing to change the number of the control channel transmission antennas is received from the transmission apparatus 10 (3-10). When such an instruction is not received, the number of the control channel reception antennas is kept the same (3-11). Then, the sequence is returned to step 3-3.

When it is determined at step 3-10 that the instruction of the timing to change the number of the control channel transmission antennas is received, an acknowledgment of the reception of the instruction is transmitted to the transmission apparatus 10 (3-12). After a period of time corresponding to the frames determined by the instruction for the change timing elapses, the control channel is received through the predetermined number of the reception antennas (3-13). Then, the sequence is returned to step 3-3.

The object of the invention is achieved by the system, transmission apparatus and reception apparatus according to the independent claims. The dependent claims refer to preferred embodiments of the invention.

The transmission antenna number selection portion may select one antenna or the maximum number of antennas.

The transmission antenna number selection portion may select any one of one though the maximum number of transmission antennas.

## Claims

1. A communications system comprising:
a transmission apparatus (10) that transmits radio signals using a plurality of transmission antennas (TA); and
a reception apparatus (20) that receives the radio signals using a plurality of reception antennas (RA);
wherein multiplexed transmission control information is stored to be transmitted in a control channel area of at least one of a plurality of transmission frames corresponding respectively to the radio signals transmitted from the plural transmission antennas, the multiplexed transmission control information being obtained by multiplexing pieces of transmission control information for radio signals transmitted from the plural transmission antennas,
wherein the reception apparatus includes a transmission quality information notification portion (23) that measures transmission quality of the radio signals from the transmission apparatus so as to obtain transmission quality information and transmits the transmission quality information to the transmission apparatus, **characterized in that**
the transmission apparatus includes a transmission antenna number selection portion (12) that selects the number of antennas that transmits the multiplexed transmission control information in accordance with the transmission quality information received from the reception apparatus.

2. The communications system of claim 1,
wherein the transmission apparatus (10) and the reception apparatus (20) further include an antenna number selection table that stores antenna numbers corresponding to the transmission quality information,
wherein the transmission apparatus refers to the antenna number selection table so as to determine the number of the transmission antennas (TA) for use in transmitting the multiplexed transmission control information, and
wherein the reception apparatus refers to the antenna number selection table so as to determine the number of the reception antennas (RA) for use in receiving the multiplexed transmission control information.

3. The communications system of claim 1,
wherein when the reception apparatus (20) determines that the number of reception errors is more than or equal to a predetermined number the reception apparatus notifies the transmission apparatus (10) of a propagation channel anomaly which corresponds to the transmission quality information and selects the maximum number of the reception antennas (RA) for use in receiving the multiplexed transmission control information, and
wherein when the transmission apparatus is notified of the propagation channel anomaly the transmission apparatus selects the maximum number of the transmission antennas (TA) for use in transmitting the multiplexed transmission control information.

4. A transmission apparatus (10) comprising:
a plurality of transmission antennas (TA) ; **characterized in that** it further comprises
a transmission antenna number selection portion (12) that selects the number of the transmission antennas that transmit multiplexed transmission control information obtained by multiplexing multiple pieces of transmission control information for corresponding radio signals in accordance with transmission quality information transmitted from a reception apparatus (20); and
a notification portion that notifies the reception apparatus of the selected number of the transmission antennas.

5. A reception apparatus (20) comprising:
a plurality of reception antennas (RA);
a transmission quality notification portion (23) that notifies a transmission apparatus of transmission quality information determined in accordance with a reception signal;
**characterized in that** it further comprises
an antenna number selection table that stores the number of the reception antennas in accordance with the transmission quality information; and
a reception antenna number selection portion (24) that selects in reference to the antenna number selection table the number of the reception antennas for use in receiving multiplexed transmission control information obtained by multiplexing multiple pieces of transmission control information for corresponding radio signals.

## Patentansprüche

1. Kommunikationssystem mit:
einer Sendevorrichtung (10), die Funksignale unter Verwerdung einer Vielzahl von Sendeantennen (TA) sendet; und
einer Empfangsvorrichtung (20), die die Funksignale unter Verwendung einer Vielzahl von Empfangsantennen (RA) empfängt;
bei dem gemultiplexte Sendesteuerinformationen gespeichert sind, um in einem Steuerkanalbereich von wenigstens einem von einer Vielzahl von Senderahmen gesendet zu werden, die jeweilig den von den vielen Sendeantenne gesendeten Funksignalen entsprechen, welche gemultiplexten Sendesteuerinformationen erhalten werden, indem einzelne Sendesteuerinformationen für Funksignale, die von den vielen Sendeantennen gesendet werden, gemultiplext werden,
bei dem die Empfangsvorrichtung einen Sendequalitätsinforrmationsmitteilungsabschnitt (23) enthält, der die Sendequalität der Funksignale von der Sendevorrichtung misst, um Sendequalitätsinformätionen zu erhalten, und die Sendequalitätsinformationen an die Sendevorrichtung sendet, **dadurch gekennzeichnet, dass**
die Sendevorrichtung einen Sendeantennenanzahl-Selektionsabschnitt (12) enthält, der die Anzahl von Antennen, die die gemultiplexten Sendesteuerinformationen senden, gemäß den von der Empfangsvorrichtung empfangenen Sendequalitätsinformationen selektiert.

2. Kommunikationssystem nach Anspruch 1,
bei dem die Sendevorrichtung (10) und die Empfangsvorrichtung (20) ferner eine Antennenanzahl-Selektionstabelle enthalten, die Antennenanzahlen entsprechend den Sendequalitätsinformationen speichert,
bei dem die sendevarrichtung auf die Antennenanzahl-Selektionstabelle Bezug nimmt, um die Anzahl der Sendeantennen (TA) zur Verwendung beim Senden der gemultiplexten Sendesteuerinformationen zu bestimmen, und
bei dem die Empfangsvorrichtung auf die Antennenanzahl-Selektionstabelle Bezug nimmt, um die Anzahl der Empfangsantenne (RA) zur Verwendung beim Empfangen der gemultiplexten Sendesteuerinformationen zu bestimmen.

3. Kommunikationssystem nach Anspruch 1,
bei dem dann, wenn die Empfangsvorrichtung (20) bestimmt, dass die Anzahl von Empfangsfehlern größer gleich einer vorbestimmten Anzahl ist, die Empfangsvorrichtung der Sendevorrichtung (10) eine Ausbreitungskanalanomalie, die den Sendequalitätsinformationen entspricht, mitteilt und die maximale Anzahl der Empfangsantennen (RA) zur Verwendung beim Empfangen der gemultiplexten Sendesteuerinformationen selektiert, und
bei dem dann, wenn der Sendevorrichtung die Ausbreitungskanalanomalie mitgeteilt wird, die Sendevorrichtung die maximale Anzahl der Sendeantennen (TA) zur Verwendung beim Senden der gemultiplexten Sendesteuerinformationen selektiert.

4. Sendevorrichtiing (10) mit:
einer Vielzahl von Sendeantennen (TA); **dadurch gekennzeichnet, dass** sie ferner umfasst:
einen Sendeantennenanzahl-Selektionsabschnitt (12), der die Anzahl der Sendeantennen, die gemultiplexte Sendesteuerinformationen senden, die durch Multiplexen von vielen einzelnen Sendesteuerinformationen für entsprechende Funksignale erhalten werden, gemäß Sendequalitätsinformationen selektiert, die von einer Empfangsvorrichtung (20) gesendet werden: und
einen Mitteilungsabschnitt, der der Empfangsvorrichtung die selektierte Anzahl der Sendeantennen mitteilt.

5. Empfangsvorrichtung (20) mit:
einer Vielzahl von Empfangsantennen (RA);
einem Sendequalitätsmitteilungsabschnitt (23), der einer Sendevorrichtunq Sendequalitätsinformationen mitteilt, die gemäß einem Emprangssignal bestimmt werden;
**dadurch gekennzeichnet, dass** sie ferner umfaßt:
eine Antennenanzahl-Sclcktionstabelle, die die Anzahl der Empfangsantennen gemäß den Sendequalitätsinformationen speichert; und
einen Empfangsantennenanzahl-Selektionsabschnitt (24), der unter Bezugnahme auf die Antennenanzahl-Selektionstabelle die Anzahl der Empfangsantennen zur Verwendung beim Empfangen von gemultiplexten Sendesteuerinformationcn selektiert, die durch Multiplexen vieler einzelner Sendesteuerinformationen für entsprechende Funksignale erhalten werden.

## Revendications

1. Système de communication comportant. :
un appareil de transmission (10) qui transmet des signaux radio en utilisant une pluralité d'antennes de transmission (TA) ; et
un appareil de réception (20) qui reçoit les signaux radio en utilisant une pluralité d'antennes de réception (RA) ;
dans lequel une information de contrôle de transmission multiplexée est mémorisée pour être transmise dans une zone de canal de contrôle d'au moins l'une d'une pluralité de trames de transmission correspondant respectivement aux signaux radio transmis depuis la pluralité d'antennes de transmission, l'information de contrôle de transmission multiplexée étant obtenue en multiplexant des parties d'information de contrôle de transmission pour des signaux radio transmis depuis la pluralité d'antennes de transmission,
dans lequel l'appareil de réception comprend une partie de notification d'information de qualité de transmission (23) qui mesure la qualité de transmission de signaux radio depuis l'appareil de transmission de manière à obtenir une information de qualité de transmission et transmet l'information de qualité de transmission à l'appareil de transmission, **caractérisé en ce**
l'appareil de transmission comprend une partie de sélection de nombre d'antennes de transmission (12) qui sélectionne le nombre d'antennes qui transmettent l'information de contrôle due transmission multiplexée conformément à l'information de qualité de transmission reçue depuis l'appareil de réception.

2. Système de communication selon la revendication 1,
dans lequel l'appareil de transmission (10) et l'appareil de réception (20) comprennent en outre une table de sélection de nombre d'antennes qui mémorise les nombres d'antennes correspondant à l'information de qualité de transmission,
dans lequel l'appareil de transmission se réfère à la table de sélection de nombre d'antennes de manière à déterminer le nombre d'antennes de transmission (TA) utilisées lors de la transmission de l'information de contrôle de transmission multiplexée, et
dans lequel l'appareil de réception se réfère à la table de sélection de nombre d'antennes de manière à déterminer le nombre d'antennes de réception (RA) utilisées lors de la réception de l'information de contrôle de transmission multiplexée.

3. Système de communication selon la revendication 1,
dans lequel, lorsque l'appareil de réception (20) détermine que le nombre d'erreurs de réception est supérieur ou égal à un nombre prédéterminé, l'appareil de réception notifie l'appareil de transmission (10) d'une anomalie de canal de propagation qui correspond à l'information de qualité de transmission et sélectionne le nombre maximum d'antennes de réception (RA) utilisées pour la réception de l'information de contrôle de transmission multiplexée, et
dans lequel, lorsque l'appareil de transmission est notifié de l'anomalie de canal de propagation, l'appareil de transmission sélectionne le nombre maximum d'antennes de transmission (TA) utilisées pour transmettre l'information de contrôle de transmission multiplexée.

4. Appareil de transmission (10) comportant :
une pluralité d'antennes de transmission (TA) ; **caractérisé en ce qu'**il comporte en outre
une partie de sélection de nombre d'antennes de transmission (12) qui sélectionne le nombre d'antennes de transmission qui transmettent de multiples parties d'information de contrôle de transmission pour des signaux radio correspondants conformément à l'information de qualité de transmission transmise depuis un appareil de réception (20) ; et
une partie de notification qui notifie l'appareil de réception du nombre sélectionné d'antennes de transmission.

5. Appareil de réception (20) comportant :
une pluralité d'antennes de réception (RA) ;
une partie de notification de qualité de transmission (23) qui notifie un appareil de transmission d'une information de qualité de transmission déterminée conformément à un signal de réception ;
**caractérisé en ce qu'**il comporte en outre
une table de sélection de nombre d'antennes qui mémorise le nombre d'antennes de réception conformément à l'information de qualité de transmission ; et
une partie de sélection de nombre d'antennes de réception (24) qui sélectionne, en référence à la table de sélection de nombre d'antennes, le nombre d'antennes de réception utilisées pour la réception de l'information de contrôle de transmission multiplexes obtenue en multiplexant de multiples parties d'information de contrôle de transmission pour des signaux radio correspondants.
